# EUROPEAN PATENT SPECIFICATION

(11) **EP 1 588 579 B1**
(45) Date of publication and mention of the grant of the patent: **25.10.2006**
(21) Application number: 04706216.1
(22) Date of filing: 29.01.2004
(51) Int. Cl.: H04Q 7/38

(54) **TFC SELECTION IN THE UPLINK**
TFC-AUSWAHL IN DER AUFWÄRTSSTRECKE
CHOIX DE TFC DANS LA LIAISON MONTANTE

(30) Priority: 29.01.2003 GB 0302024
(43) Date of publication of application: 26.10.2005
(73) Proprietor: SIEMENS AKTIENGESELLSCHAFT, 80333 München (DE)
(72) Inventor: PROVVEDI, Leonardo, Eastleigh, Hampshire SO53 4LT (GB)
(74) Representative: Payne, Janice Julia
(86) International application number: PCT/GB2004/000369
(87) International publication number: WO 2004/068886

(56) References cited:
- WO-A-00/28760
- US-A1- 2002 164 980
- US-B1- 6 181 686
- ETSI: "Digital cellular telecommunications system (phase 2+); GSM/EDGE Radio access network (GERAN) overall description; Stage 2; (3GPP TS 43.051 version 5.7.0 Release 5)" ETSI TS 143 051 V5.7.0, August 2002 (2002-08), pages 1-45, XP002283606
- NOKIA : "Two treshold NodeB packet scheduling" TSG RAN WG1 29 MEETING, 5 - 8 November 2002, pages 1-5, XP002283607 Shangai, China cited in the application

## Description

The present invention relates to the control of multichannel or multimedia data communications from a mobile station to a network, particularly in a GSM mobile telephone system, also known as GERAN - GSM/EDGE Radio Access Network

In earlier embodiments of GSM, the channel coding to be used in the uplink is selected by the network. This is true both in the case of the selection of the codec mode for the adaptive multi-rate (AMR) speech codec and in the case of the selection of the coding scheme for GPRS and EGPRS. The selection is made on the basis of the condition of the uplink - that is, the transmission path from the mobile station to the network - and is signalled to the mobile station. If the uplink is in a good condition, large amounts of data may be transmitted. The mobile station did not participate in defining the channel coding scheme to be used in the uplink.

In earlier embodiments of GSM/GPRS, communication between a network and a mobile station is defined as a single or a multitude of temporary block flows (TBFs), a TBF being a set of procedures defining protocols for data transfer, data acknowledge and so on. At any moment in time, only one TBF is allowed to transmit data in the uplink. The network would send a USF (Uplink State Flag) signal to the mobile station. This signal informs the mobile station of which TBF is given permission to use the radio channel. The mobile station did not participate in defining the TBF allowed to transmit data. This is possible to manage for the network because only one TBF can be transmitted in a single radio block.

A recent improvement to the GSM service is the proposed Flexible Layer One (FLO). This improvement will allow data belonging to different TBFs to be transmitted from the mobile station to the network in a single radio block. For example, the different TBFs could correspond to voice data, control data, an image file, video data, interactive web-based service data, or unidentified user data for transfer across the network. Each of these data types will have a defined priority, and tolerated delay. For instance, if transmitting a static image file, it is important that all data is received, but it is of relatively little importance whether the complete file takes a long time to arrive at its destination. On the other hand, when transmitting voice data, it is important that the data arrive with as short a delay as possible, whereas the loss of occasional data is relatively unimportant. Control signalling between the mobile station and the network, on the other hand, must be received quickly and accurately. Similar criteria could be defined for other data types.

For example, control data, voice and video data may be multiplexed together into a single radio block, and all data types may meet the requirements for quality and timely delivery. Should the uplink quality degrade, it may no longer be possible to transmit all of these types of data together. A decision will need to be taken as to whether to transmit, for example, just the control data, the control data and the video data or the control data and the voice data.

In known versions of FLO, the transmitter sends, together with the data, a TFCI (Transport Format Combination Indicator) signal to the receiver, to inform it of the particular Transport Format Combination (TFC), i.e. combination of data types, that has been used during transmission. A major drawback with this system is that the TFC to be used by the mobile station cannot be selected by the network, as the network is unaware of the types and quantity of each data type that the mobile station has to transmit. Therefore, it is desirable that the mobile station should be involved in deciding the data transmission format to be used.

In the UTRAN system, the scheduling of uplink data is under the control of the mobile station. Further details may be found in 3GPP TS 25.133, 3GPP TS 25.321 and 3GPP TS 25.331, available from the internet site www.3gpp.org. The mobile station handles the dynamic control of the uplink formatting, although the base station has the possibility to limit the selection available to the mobile station in a semi-static fashion. The TFC to be used in the uplink will to some extent depend on the conditions of the radio channel. The system is arranged such that the base station receives equal signal power from all mobile stations. Voice, data and other services have different power requirements which may be accommodated within a fixed received power level. The power transmitted by the mobile station is adjusted, by means of a feedback loop, so that the power received by the base transceiver station (BTS or Node B) is approximately constant, equal to a value set by the network. For the UTRAN system, this feedback loop may operate at a speed of 1500Hz. This enables the mobile station to obtain an estimate of the uplink channel conditions from the transmit power commanded by the network, offering effective TFC adaptation to uplink channel conditions. However, the corresponding feedback loop in GSM/GERAN operates only at approximately 2Hz. This is too slow for effective TFC adaptation to uplink channel conditions. Therefore, a system similar to that used in the UTRAN system could not be used in the GSM / GERAN system. A criterion based on the estimated mobile station transmit power, as used for UTRAN, is suitable for a CDMA system (where power is the common shared resource) but would not work in a TDMA system such as GSM/GERAN. Therefore, different criteria need to be defined for the GSM/GERAN mobile station to decide whether a TFC is available for use or not.

The present invention accordingly seeks a method for providing an effective mechanism to enable a mobile station to select an appropriate transport format combination (TFC) based on uplink channel conditions.

For Flexible Layer One (FLO) operation in GSM/GERAN, it has been agreed in 3GPP that the TFC to be used in the uplink is selected by the mobile station. However, in order to select the best TFC during every Transmission Time Interval (TTI), the mobile station should have an estimate of the radio channel conditions, such as the channel-to-interference ratio CIR. The problem is that the channel conditions in the uplink are not known to the mobile station, but only to the network. Therefore, in the algorithm proposed in this application for the GERAN, the mobile station will need to rely on assistance provided by the network to perform a selection.

A somewhat similar scheme for application to UTRAN communication systems is described in Tdoc R1-02-1277 presented at the TSG-RAN WGI #29 meeting in November 2002 and available from the internet site www.3gpp.org.

International Patent Application WO 00/28760 A2 described a system wherein allowed transport format combinations are selected by the network and identified to a mobile station.

The mobile station may request a change of allowed transport format combination, which the network may choose to allow.

In US Patent 6,181,686, a measurement of uplink quality is sent to the mobile station. The mobile station can use this information to decide whether a change of data transfer mode is needed.

US patent application 202/0164980 describes a radio communication apparatus, with a flexibly configurable layer over transport channels

The invention accordingly provides, in a mobile communications system comprising a network and at least one mobile station, a method for selecting a transport format combination TFC to be used for communication from the mobile station to the network, over a channel of variable quality. The method comprises the steps of, in the network:
a) defining a set of possible transport format combinations;
b) calculating a channel quality requirement for the effective use of each transport format combination;
c) indicating the transport format combinations and the channel quality requirements to the mobile station;
d) calculating an existing quality of the channel of variable quality; and
e) indicating the existing quality of the channel of variable quality to the mobile station; and, in the mobile station;
f) storing the transport format combinations and relative channel quality requirements;
g) receiving the indication of existing channel quality;
h) selecting one of the transport format combinations having a channel quality requirement no greater that the existing channel quality, and
i) informing the network of the selected transport combination;
characterised in that the indication of the existing quality of the channel of variable quality is communicated to the mobile station by inband signalling, whereby the indication of the existing quality of the channel of variable quality is included in every downlink radio packet, in data locations normally assigned for carrying user information.

The step (h) of selecting one of the transport format combinations may be performed with regard to the type of data to be transmitted by the mobile station.

The transport format combinations preferably enable transmission of data blocks containing data from different TBFs in each block.

Calculation of the existing quality of the channel of variable quality may be performed periodically during communication.

The relative channel quality may be calculated as the minimum channel quality required such that data sent on the channel is received with an error ratio below a defmed threshold.

The step (c) of indicating transport format combinations and channel quality requirements to the mobile station may include the steps of:
(c1) ranking the transport format combinations according to the associated channel quality requirement; and
(c2) indicating the rank (TFCI) of each transport format combination to the mobile station, along with the transport format combinations themselves, to the mobile station.

The step (c2) of indicating the rank of each transport format combination may comprise indicating the transport format combinations themselves in order of increasing, or decreasing, rank.

The step of indicating the existing quality of the channel of variable quality comprises indicating the rank of the transport format combination having the highest channel quality requirement, which could effectively be employed on the channel in its existing quality.

The rank may be indicated as an absolute value. Alternatively, the rank may be indicated as a relative value, being an offset relative to a previous value of the rank.

The present invention also provides a communications system arranged to operate according to the method described. The present invention also provides a network arranged to operate within such a communications system. The present invention also provides a mobile station arranged to operate within such a communications system.

The above, and further, objects characteristics and advantages of the present invention will become more apparent from consideration of the following description of certain embodiments, given by way of examples only, with reference to the accompanying drawings, wherein:
Fig. 1 schematically shows the allocation of transport format combination identifiers (TFCIs) to transport format combinations (TFC), and the indication of one TFCI defining a range of allowed TFCs;
Fig. 2 shows results of simulations showing a comparison of user data throughput for various alternative signalling methods according to certain embodiments of the present invention, assuming acknowledged mode operation of the radio link control (RLC); .
Fig. 3 shows results of simulations showing a comparison of SDU FER (service data unit frame erasure rate) for various signalling mechanisms according to certain embodiments of the present invention, assuming acknowledged mode operation of the radio link control (RLC);
Fig. 4 shows results of simulations showing a comparison of user data throughput for various alternative signalling methods according to certain embodiments of the present invention, assuming unacknowledged mode operation of the radio link control (RLC);
Fig. 5 shows results of simulations showing a comparison of SDU FER (service data unit frame erasure rate) for various signalling mechanisms according to certain embodiments of the present invention assuming unacknowledged mode operation of the radio link control. (RLC); and
Fig.6 schematically shows a current format of radio packet for the Flexible Layer One before the operation of interleaving, and a new format detailing a possible position of the inband bits, according to an embodiment of the invention.
A basic description of an example of the invention follows. A background description of TFC selection is available in 3GPP TR 45.902, presented at 3GPP TSG GERAN#15 in June 2003 and available from the internet site www.3ggp.org.
1. The network configures a set of possible service mixes - transport format combinations (TFCs) - and signals these to the mobile station. When defining the transport format combination set (TFCS), the TFCs are ranked according to the radio conditions or signal quality required to achieved the specified quality of service. For example, the requirement could be that, with the current radio conditions, the transport blocks sent on all the transport channels (TrCHs) included in the TFC are received with a block error ratio (BLER) lower than a specified value, e.g. 1%. Accordingly, the higher the TFCI, the better the quality of the radio link required. This could be characterised, for example, in terms of the received power level (RXLEV), bit error probability (BEP), the block error ratio (BLER) on the different transport channels, or other parameters.
2. The ranking is communicated to the mobile station at call set-up by means of the order in which they are signalled in the assignment message: the TFCs are signalled in the assignment message in increasing order of quality of the link required-It has been agreed to use in the GERAN system the same mechanism that is used in the UTRAN system, whereby the TFCls are not signalled explicitly in the configuration messages, but are associated to the TFCs in the order in which they are received by the mobile station in a Layer 3 message, although this is not a requirement of the present invention. For example, the first TFC to be signalled will be assigned a TFCI=0, the second TFC will be assigned a TFCI=1, etc. With this mechanism, if the TFCs are signalled in increasing order of required link quality, the TFCs that require better channel conditions will be associated with higher TFCls.
3. Based on the measurement performed by the BSS, the network determines periodically within a call the highest allowed TFC, representing the TFC of highest link quality which, with the existing current radio conditions, would meet the quality of service criteria.
4. The network sends in the downlink the indication of such TFC, for example by signalling its associated TFCI.
5. The mobile station will be allowed to use only TFCs whose TFCI is no higher than the TFCI of the highest allowed TFC, indicated by the network. Some of those TFCs may be restricted for use by higher layer signalling. In that case, the medium access control (MAC) layer will not consider them as possible candidates for selection. The mobile station then selects the particular TFC to be used for transmission in the uplink, for example according to the priority of the data available to be transmitted and other scheduling criteria.

The present invention accordingly provides a method of operation of transmission of data blocks containing data from different TBFs in each block, wherein the transmission channel is of variable quality. The invention is of particular application to the transmission of data from mobile stations by the GSM - or GERAN, system.

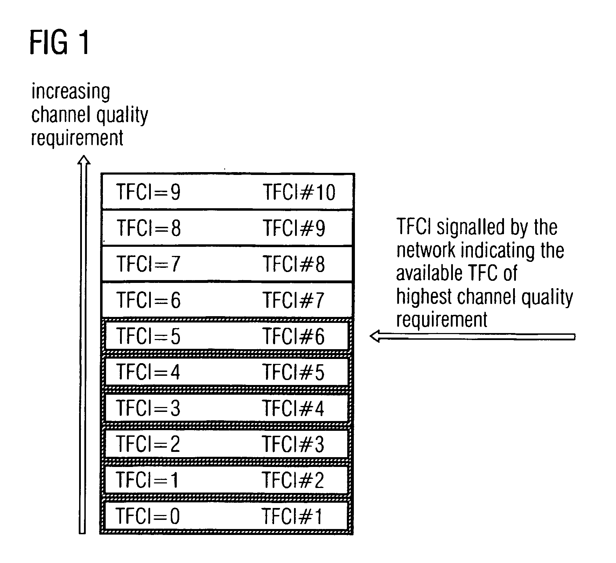

The present invention relates to a network assisted uplink TFC (transport format combination) selection. A transport format combination defines the types and rates of different types of data that may be transmitted in a "flexible layer one" by a mobile station to the network. Each transport format combination TFC will have a certain requirement for data rates and delays, and this will define a minimum quality of radio condition required for use of that TFC. TFC's may be ranked according to the radio conditions, that is to say, the signal quality of the uplink, required to use the particular TFC. As illustrated in Fig. 1, these may conveniently be associated with TFC identifiers (TFCI) ordered by number, wherein a TFC identified by a higher numbered TFCI needs a higher quality signal in order to operate than does a TFC with a lower numbered TFCI.

In the illustrated example, the signal quality is assumed to be just sufficient to allow TFC#6, the TFC identified by TFCI = 5, to be used. Since the TFCs TFC#1 to TFC#5 identified by TFCI = 0 to 4 each require a lower signal quality than TFC#6, then each of these TFCs is also available for use. Conversely, since the TFCs TFC#7 to TFC#10 identified by TFCI = 6 to 9 each require a higher signal quality than TFC#6, then none of these TFCs is available for use. This situation is illustrated in Fig. 1, where the TFCs represented by shaded boxes are available for use. For example TFCI=0 may indicate TFC#1, which is arranged to carry control messages only; TFCI=3 may indicate TFC#4, which is arranged to carry conversational service only; TFCI=5 may indicate TFC#6, which is arranged to carry conversational service multiplexed with a small amount of interactive data; and TFCI=9 may indicate TFC#10, which is arranged to carry control conversational service multiplexed with a background service. Of course, these definitions are merely examples, and other definitions may be provided, dependent of the types of data to be transferred, and their relative priority. The uplink signal quality requirement for each TFC may be defined in terms of received signal level, bit error probability, block error ratio on different transport channels, or other parameters.

The ranking of the TFCs is performed by the network. The ranking must be communicated to the mobile station. This may be performed by transmitting the definitions of the TFCs to the mobile station in order of ascending or descending TFCI, that is to say, in order of ascending or descending required quality of the required radio uplink, so that the mobile station may store the TFC definitions in the correct position in the stack shown in Fig. 1.

In operation, part of the network, such as the base station subsystem BSS, determines the current radio conditions of the uplink. This is performed in a manner known in itself to those skilled in the art. The network determines the TFC of value of pointer 10 indicating the highest allowed TFC which would be capable of being transmitted effectively with the prevailing radio channel conditions. The network transmits this TFCI to the mobile station on the downlink. This transmission may be made using one of the methods described later on the application.

The network - typically in the base transceiver station - will calculate the highest allowed TFC by applying an algorithm to the measured values representing the quality of the radio transmission. For example, the measurements may represent the received signal strength (RXLEV), the bit error probability (BEP), the block error ratio (BLER). This calculation may be performed by the Medium Access Control (MAC) layer of the base station, that is, part of the control software employed by the base station to control signalling to the mobile station.

The base station may perform similar calculations in order to select the TFC to be used in the downlink, that is, in the transmissions to the mobile station. For these calculations, the measurements used will need to be provided by the mobile station to indicate the radio conditions - signal quality - of the downlink.

The mobile station is then free to select among the allowed TFCs - the shaded ones in the example of Fig. 1. As discussed earlier, each TFC typically provides a different combination of transmission for different data types in single radio blocks. The mobile station will choose the allowed TFC most appropriate to the type, quantity and priority of the data it has to transmit. The selection may typically be made by the medium access control (MAC) layer of the mobile station, being part of the software stored inside of the mobile station which defines its operation. The mobile station then sends an indication of the TFC that it is going to use to the network.

The signalling method used by the network should be part of the 3GPP standards for compatibility between mobile stations and network equipment from different manufacturers. The rules and criteria used by the MAC layer should also be standardised.

An aspect of the present invention relates to the methods used to signal the highest allowed TFC to the mobile station. The present invention provides numerous alternative methods for signalling the value of TFCI indicating the highest allowed TFC to the mobile station.

Three principal methods for the network to signal the value of TFCI indicating the highest allowed TFC to the mobile station are: inband signalling; using bits from the SACCH channel associated with the dedicated traffic channel; and use of a new signalling channel, associated with the slow associated control channel with embedded enhanced power control SACCH/TP, to replace the EPCCH. Each of these alternatives will be discussed in turn, along with alternative ways of communicating the TFCI, either by absolute value or by relative value.

"Inband signalling" means that the TFCI corresponding to the value of TFCI indicating the highest allowed TFC is included in every downlink radio packet, in data locations normally assigned for carrying user information, such as voice or video signals. One radio packet is sent every 20ms. Using inband signalling has the advantage that a new value of TFCI indicating the highest allowed TFC could be signalled to the mobile station every 20ms, and therefore the adaptation to the uplink channel conditions is very fast. One disadvantage of this arrangement is that signalling in each radio packet will consume radio resources and will lead to a degradation of performance. For example, a higher carrier to interference ratio (CIR) will be required in order for the transport blocks carried in the radio packet to achieve the same block error rate (BLER).

For certain applications, fast adaptation of the value of TFCI indicating the highest allowed TFC may not be necessary, in which case inband signalling may lead to a waste of resources.

A possible compromise could be to spread the bits of the value of pointer 10 indicating the highest allowed TFC over several radio packets. Assuming that an encoded TFCI sequence is made up of *N* bits, and that *n* of those bits are transmitted in each radio packet, then the adaptation period (i.e. the time required to transmit a new value of the TFCI) is:
┌*N*/*n*┐ × 20ms, that is, *r* × 20ms, where *(r*-1)·*n* < *N* ≤ *r·n,* and *r* is an integer.

For the purposes of the present description, it will be assumed that *N* is always equal to the number of encoded bits corresponding to the 5-bit TFCI (e.g. 36 bits in the case of GMSK full-rate channels); however, it could also be decided that *N* should be equal to the size of the TFCI used in the downlink. Concerning the value of *n*, one possible arrangement is such that only two bits are "stolen" from each radio packet (*n* = 2). This means that 18 radio packets are needed to send a 36-bit encoded TFCI, which corresponds to 360 ms. Alternatively, either 6 or 8 bits could be "stolen" from every radio packet. This would make the signalling faster.

In the case of GMSK full-rate channels, the case of *n* = 8 could also be achieved by stealing two bits from each radio burst. These two bits could be - for example - the bits adjacent to the TSC (i.e. the stealing flags). However, this would require some changes to the current interleaving algorithm for the flexible layer one (FLO).

Inband signalling has the disadvantage that that fewer bits in a radio packet are used to carry useful information, and therefore the physical layer performance will be somewhat degraded. However, if the number of bits used to signal the value of TFCI indicating the highest allowed TFC is small, then the degradation will be limited.

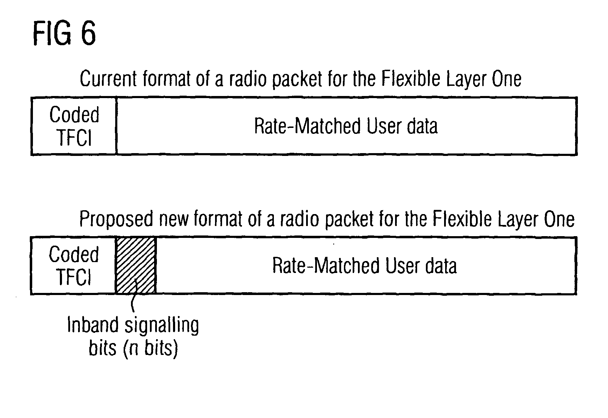

Fig. 6 schematically shows a the current format of radio packet for the Flexible Layer One before the operation of interleaving, and the new format according to an embodiment of the invention, detailing a possible position of the inband bits. The user data is the bit string that results from the rate matching algorithm.

An alternative arrangement for signalling the value of pointer 10 indicating the highest allowed TFC to the mobile station is by using bits from the SACCH (slow associated control channel) associated with the dedicated traffic channel. In a SACCH message, 2 spare bits are currently available; they are contained in the SACCH header, as shown in subclause 7.1.1 (for the *A*/*Gb mode* of the GERAN) and 7.1.2 (for the *Iu mode* of the GERAN) of 3GPP TS 44.004, available from the internet site www.3gpp.com. Each SACCH message is therefore limited to carry only 2 bits. On the other hand, signalling a TFCI value would typically require 5 bits (when sent uncoded). Therefore it is not possible to signal the value of TFCI indicating the highest allowed TFC in a single SACCH message. One possibility could be to use 3 SACCH messages. In this case the update period, being the time that elapses between the reception of two successive commands, is 3×480 ms = 1440 ms.

According to a further alternative, the slow associated control channel with embedded enhanced power control SACCH/TP may be used, similarly to the known operation of Enhanced Power Control (EPC). Instead of using the EPCCH associated with it, a new channel may be provided in parallel with the EPCCH for signalling the TFCI indicating the highest allowed TFC to the mobile station. Twelve bits are available in each SACCH/TP burst, and the transmission of a TFCI requires 36 bits when encoded. It would take three SACCH bursts to signal a TFCI value. Two alternative choices are available for signalling these bursts. Firstly, a new value of the TFCI corresponding to the highest allowed TFC may be sent every three SACCH bursts, i.e. every 360 ms. This would provide the shortest update period. Secondly, a new value of the TFCI corresponding to highest allowed TFC may be sent every four SACCH bursts, i.e. every 480 ms. This would involve a longer update period, but would have the advantage of aligning the TFCI transmission with a SACCH block period.

The major problem with either of these arrangements is a relatively lengthy update period, which may delay the provision of a value of TFCI indicating the highest allowed TFC indication to the mobile stations. If channel conditions change quickly, the adaptation period of 360ms may be too slow, and the performance of the system may be unsatisfactory. Another disadvantage of using SACCH/TP is that Enhanced Power Control (EPC) could not be used with Flexible Layer One. This is presently regarded as a serious drawback, and such arrangements are not presently preferred.

In all of the schemes proposed above, the major problem is the time delay for the base transceiver station (BTS) or other part of the network to perform the measurements and for the network to signal the value of TFCI indicating the highest allowed TFC to the mobile station. The actual delay will depend to a certain extent on the particular scheme used to signal it. The adaptation rate may be too slow, resulting from a long update period. If the channel conditions vary rapidly, the performance of this procedure may not be very good.

An alternative approach is that, instead of signalling the complete, absolute TFCI value each time, an incremental value could be sent. For example, the network may simply signal "UP" or "DOWN" to cause the value of the TFCI corresponding to the highest allowed TFC, represented by pointer 10 in Fig. 1, to increase or decrease respectively by one unit. This will be referred to as signalling the relative value. The initial value of the TFCI representing the highest allowed TFC could be signalled in the assignment message, together with the transport format combination set (TFCS) configuration.

In an example, the two spare bits in the SACCH header could be used. In such an example a command varying the value of pointer 10 indicating the highest allowed TFC identity by a relative value could be encoded using these two bits as follows:

| | | |
|---|---|---|
| 00 | HOLD | keep current value |
| 01 | DOWN | move one position down |
| 10 | UP | move one position up |
| 11 | FAST | move two positions in the same direction as the preceding command [UP/DOWN] |

The SACCH header is transmitted every 480ms, meaning that the update period is quite long in a multiple of 480ms, depending on the magnitude of the change.

In the case of the use of a channel in parallel with the SACCH/TP (alternative to the EPCCH channel), an uncoded message of 2 bits could be encoded using the 12 bits available in each SACCH burst, each SACCH burst having 120 ms burst length. If two bits are stolen from each radio packet and an encoded message is made up of 12 bits, then one command can be sent every 120 ms. Furthermore, if six bits are stolen from every radio packet, for example two bits per burst, then a 12 bit message can be sent in two Transmission Time Intervals (TTIs), i.e. every 40ms.

This operation scheme whereby the relative value is signalled may be the most suitable if inband signalling were chosen. Again, if two bits are stolen from each radio packet and an encoded message is made up of 12 bits, then one command can be sent every 120 ms. But if 6 bits are stolen from every radio packet, then a 12-bit message can be sent in two transmission time intervals (TTIs), i.e. 40 ms.

The advantage of signalling the relative value is that the adaptation to the channel is faster, however the value of TFCI indicating the highest allowed TFC can be only varied in small steps. While a shorter response time is possible, it may take even longer to signal very sharp changes in the highest allowed TFCI.

A summary of possible alternatives for signalling the value of TFCI indicating the highest allowed TFC in GMSK full-rate channels described in this section is given in Table 1. In the table, the update period is given for each alternative scheme.

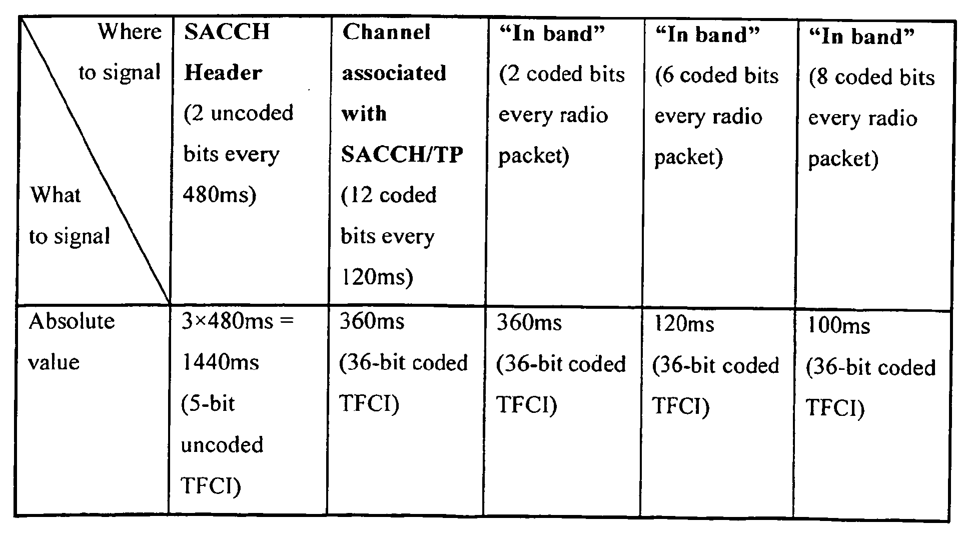

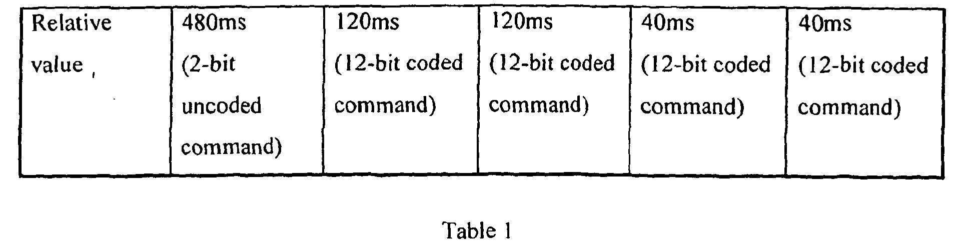

Some simulation results comparing the performance for the described signalling alternatives are presented below.

Although the preceding description has been expressed in terms of GMSK full-rate channels, similar methods may also be applied to 8-PSK full-rate channels, as will now be described, by way of example. As explained in subclause 7.5 of 3GPP TR 45.902, for 8-PSK modulated basic physical subchannels the number of bits in an encoded TFCI sequence is twice as those of a GMSK channel. Therefore, the values given in Table 1 need to be revised as shown in Table 2. However, the SACCH is always transmitted using GMSK; therefore it is only the inband solutions that will be different: the two solutions that use either the SACCH header or a new channel sent in parallel to the SACCH/TP are not affected (it is assumed that in these two cases, the TFCI sequences defined for GMSK full-rate channels would be used).

It has been assumed that in order to signal a relative value inband, a 24-bit sequence is used, which corresponds to twice the length as in the case of GMSK full-rate channels. By doing so, the adaptation rate is the same.

Table 2 shows a summary of possible alternatives for signalling the value of pointer 10 indicating the highest allowed TFC to the mobile station using 8-PSK full-rate channels.

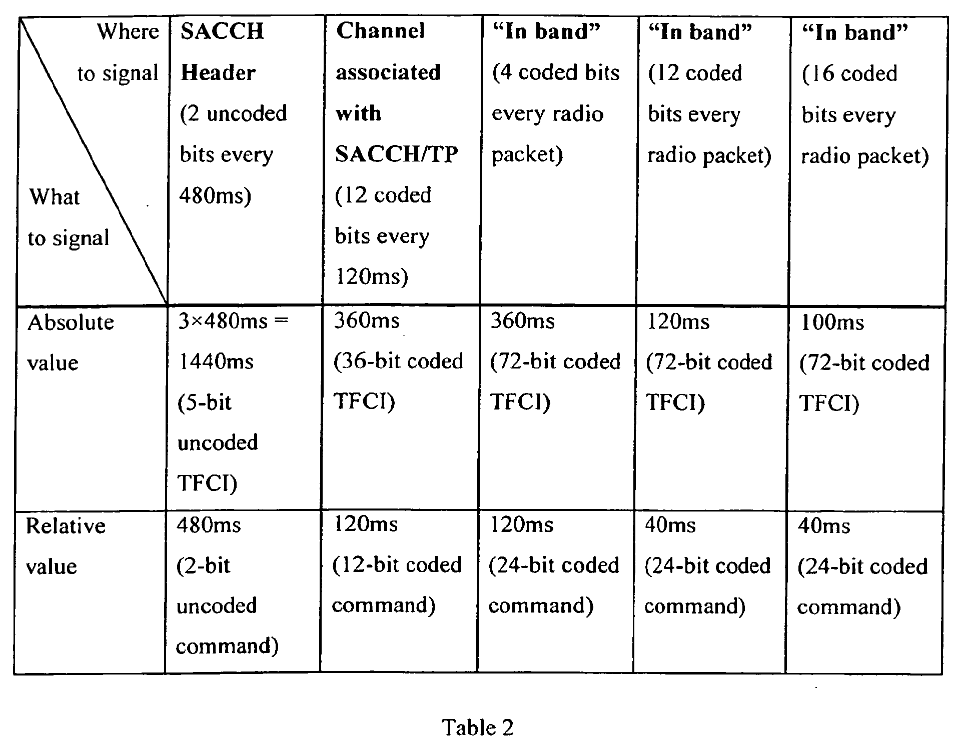

Note that in the case of the inband solutions, in order to keep the signalling rate the same as for GMSK full-rate channels, 4 coded bits are "stolen" either from a radio packet or a burst, rather than 2 symbols (6 bits) as in the case of GMSK full-rate channels.

In the case of GMSK half-rate channels, the coding of the TFCI is obtained by using only the middle segment of the coding defined for GMSK full-rate channels (see subclause 7.5 of 3GPP TR 45.902). This means that the TFCI sequences contain only half the number of bits as in the case of full-rate channels. Given that also half the number of bits is available in a radio packet, it is proposed that, for inband solutions, only 1 bit is "stolen" from each radio packet. By doing so, the signalling rate does not vary with respect to the case of full-rate channels, as shown in Table 3.

When signalling a relative value inband, it has been assumed that a 6-bit sequence is used. This would allow maintaining the same adaptation rate as in the case of full-rate channels; however, the error rate for the commands may be higher than in the case of GMSK full-rate channels, and this aspect may be investigated through simulation.

Table 3 shows a summary of possible alternatives for signalling the value of pointer 10 indicating the highest allowed TFC to the mobile station using GMSK half-rate channels.

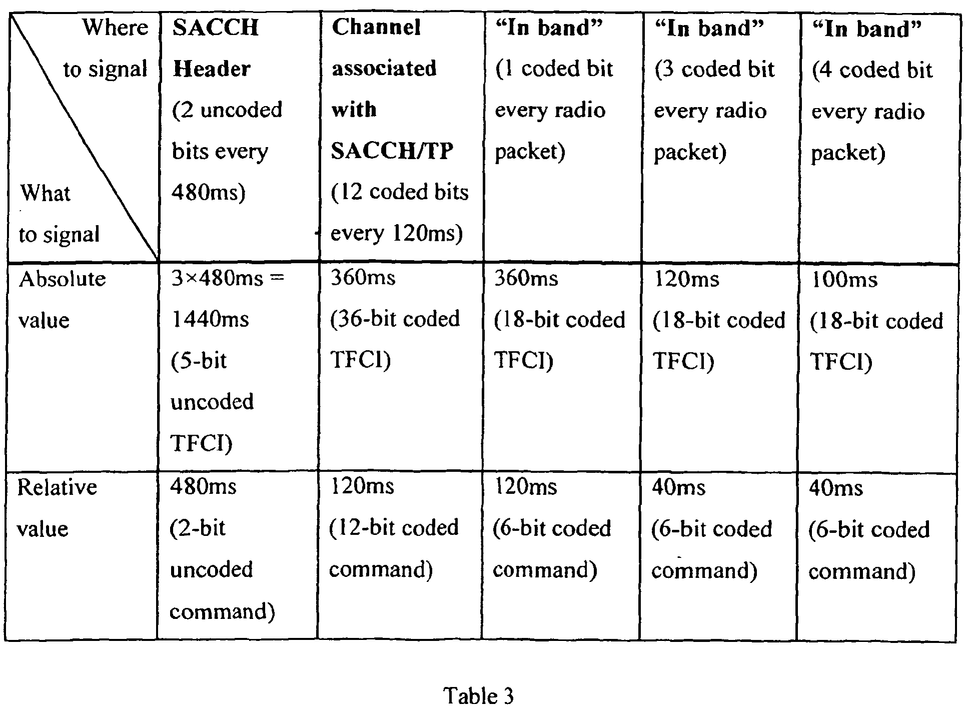

In the case of 8-PSK half-rate channels, the coding of the TFCI is obtained by using only the middle segment of the coding defined for 8-PSK full-rate channels (the number of bits is the same as in the case of GMSK full-rate channels). The update times for this case are given in Table 4.

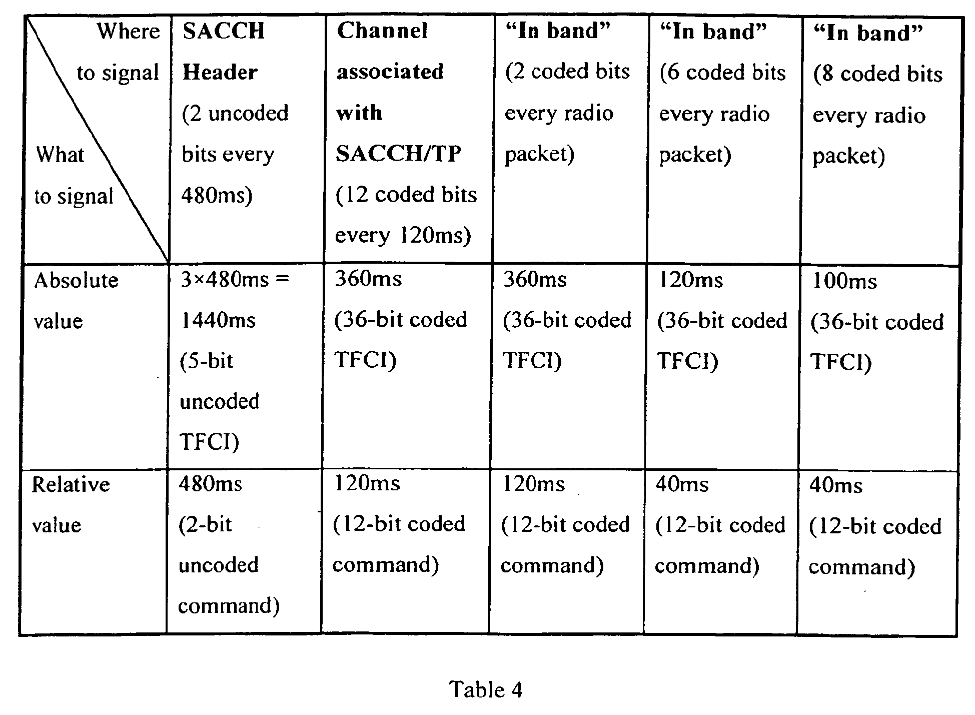

### SIMULATED RESULTS

Possible methods for selecting and signalling the Transport Format Combination (TFC) to be used in the uplink for Flexible Layer One are discussed above. There follow simulation results comparing the alternatives and comparisons of which of the schemes offers optimal performance. Both acknowledged and unacknowledged radio link control (RLC) modes are considered. The simulator used for these simulations is similar to the one used in the investigations described in GP-031389, "Performance of FLO with one transport block per transport channel per TTI", Siemens, GERAN#15, Florida (USA), 23-27 June 2003, assuming only one Transport Block per Transport Channel per Transmission Time Interval (TTI).

A summary of the simulated alternatives for TFC signalling is given in Table 5. In the table, the adaptation period and signalling method is given for each alternative scheme. All TFCs are 8PSK modulated.

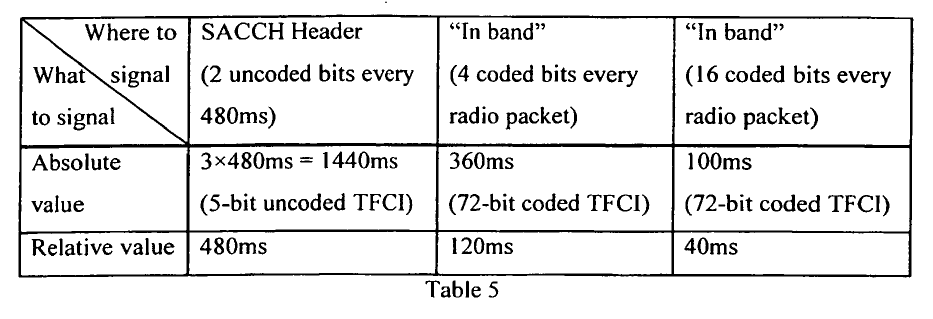

Table 6 summarises the simulation parameters used for all the simulated alternatives.

**Table 6**

| | |
|---|---|
| No. of RLC/MAC blocks simulated | 50000 |
| MPEG-4 traffic profile | Variable bit rate (VBR) mode. 48 kbit/s. Total bit rate required including all headers: 54kbit/s Maximum RTP packet size: 1400 bytes. QuickTime codec. I-VOP every ls. Medium video quality, poor rate control. |
| QoS | Target 10⁻² to 10⁻³ for RTP SDU error rate. |
| Radio Channel Profile | TU3 with ideal frequency hopping. Log-Normal Fading, correlation distance: 20m, standard deviation: 7 dB. Interference, Rx power, fast and slow fading on each timeslot are assumed to be highly correlated. |
| Physical channels | Dedicated full-rate channel (DBPSCH/F) with block interleaving. Uplink data transmission. Acknowledgments sent on the downlink channel. For Flexible Layer One operation, multislot configurations can be symmetric or asymmetric. As specified in subclause 8.3.5.1 of 3GPP TS 45.002, the symmetric case consists of only bi-directional channels, whereas the asymmetric case consists of both bi-directional and unidirectional downlink channels. Therefore, if two timeslots are used in the uplink, the downlink part of the two timeslots needs also to be allocated to the MS. In the present document, we make no assumptions on how these resources are used. 8PSK modulation only. |
| Multislot traffic channel | Two timeslots. High fading correlation between slots. The same interference is assumed for both timeslots. |
| Error Protection | Equal Error Protection (EEP). |
| Link Adaptation | Variable depending upon scheme. |
| ROHC | No header compression. 40 byte RTP/IP/UDP header. |
| SNDCP functionality | SNDCP header: 2 bytes. |
| LLC functionality | LLC is operated in unacknowledged mode. LLC header size: 2 bytes. FCS: 3 bytes. LLC frame concatenation. Frames discarded after an LLC discard time of either 3 seconds. Frames which are in the process of being transmitted are not discarded even if their lifetime exceeds the LLC discard time. Buffer size = 4 LLC frames. |

Table 7 indicates the Transport Format Combination Set used. All TFCs are 8PSK modulated.

**Table 7**

| TFC | Block size (octets) |
|---|---|
| 0 | 22 |
| 1 | 44 |
| 2 | 66 |
| 3 | 88 |
| 4 | 110 |
| 5 | 132 |

For each simulation the TFC update period of the link adaptation algorithm and the averaging period for the channel measurements is summarised in Table 8.

**Table 8**

| Mechanism | Link adaptation TFC update period | Measurement averaging period |
|---|---|---|
| SACCH Header, Relative | 480 ms | 960 ms |
| SACCH Header, Absolute | 1440 ms | 2880 ms |
| Inband, Relative | 120 ms | 240 ms |
| Inband, Relative | 40 ms | 160 ms |
| Inband, Absolute | 360 ms | 720 ms |
| Inband, Absolute | 100 ms | 200 ms |

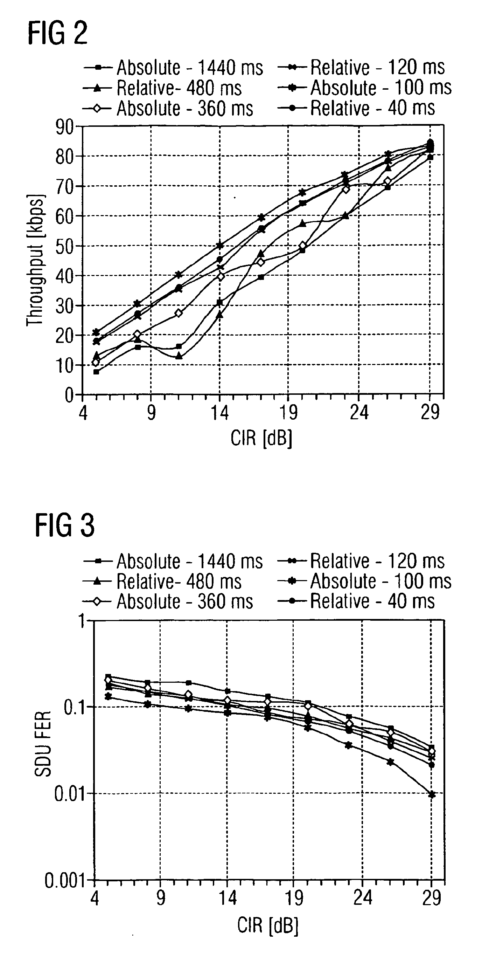

Figs. 2 and 3 respectively show the throughput and service data unit frame erasure rate (SDU FER) results for the simulated alternatives, operating in radio link control (RLC) acknowledged mode. The graphs of Figs. 2 and 3 show the throughput and service data unit frame erasure rate (SDU FER) respectively plotted against carrier-to-interference ratio (CIR).

Good throughput performance is achieved with signalling periods of 120ms or less. The fluctuations in the throughput and service data unit frame erasure rate (SDU FER) for the schemes with update periods greater than 120ms are believed to be due to poor decisions made by the link adaptation algorithm which results using a non-optimal TFC for the prevailing channel conditions.

As shown in Figs. 2 and 3, the best performance among the simulated alternatives, in terms of high throughput and low service data unit frame erasure rate (SDU FER), is achieved with absolute signalling and an update period of 100ms.

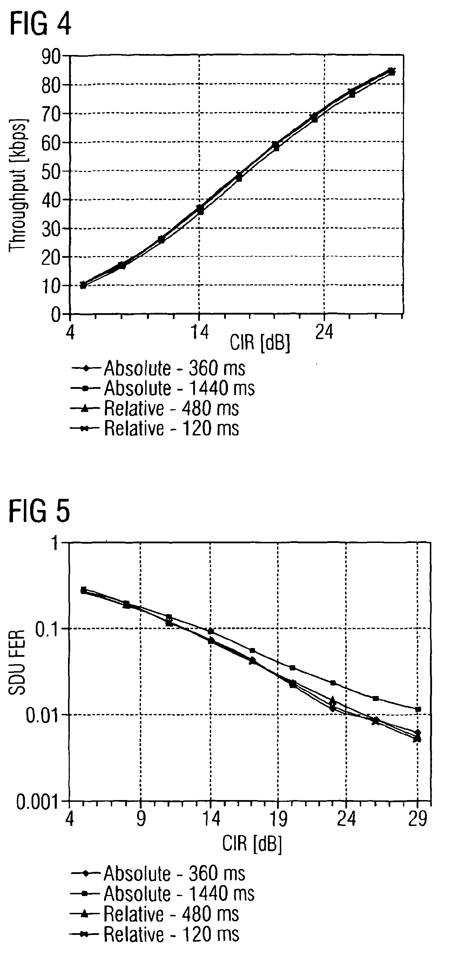

Figs. 4 and 5 respectively show the throughput and service data unit frame erasure rate (SDU FER) results for the simulated alternatives using radio link control (RLC) unacknowledged mode, plotted against carrier-to-interference ratio (CIR). The throughput for the different alternatives is approximately the same. However, with respect to the service data unit frame erasure rate (SDU FER) measurement, as illustrated in Fig. 5, the performance using a TFC update period of 1440ms is clearly worse than the others, having a higher service data unit frame erasure rate (SDU FER), and is accordingly not considered to be a preferred embodiment.

Based on the results of these simulations, a preferred embodiment of the present invention is one in which the absolute TFCI value is signalled, inband, with an update period of 100ms.

While the present invention has been described with reference to a limited number of particular embodiments, given by way of examples only, it will be clear to those skilled in the art that other alternative methods may be employed in the performance of the methods of the present invention, as defined in the appended claims.

## Claims

1. A method for selecting a transport format combination TFC to be used for communication from a mobile station a the network in a mobile communications system comprising a network and at least one mobile station, over a channel of variable quality, the method comprising the steps of:
in the network,
a) defining a set of possible transport format combinations;
b) calculating a channel quality requirement for the effective use of each transport format combination;
c) indicating the transport format combinations and the channel quality requirements to the mobile station;
d) calculating an existing quality of the channel of variable quality; and
e) indicating the existing quality of the channel of variable quality to the mobile station; and, in the mobile station;
f) storing the transport format combinations and relative channel quality requirements;
g) receiving the indication of existing channel quality;
h) selecting one of the transport format combinations having a channel quality requirement no greater that the existing channel quality, and
i) informing the network of the selected transport combination,
**characterised in that** the indication of the existing quality of the channel of variable quality is communicated to the mobile station by inband signalling, whereby the indication of the existing quality of the channel of variable quality is included in every downlink radio packet, in data locations normally assigned for carrying user information.

2. A method according to claim 1 wherein the step h of selecting one of the transport format combinations is performed with regard to the type of data to be transmitted by the mobile station.

3. A method according to claim 1 or claim 2, wherein the transport format combinations enable transmission of data blocks containing data from different Temporary Block Flows in each block.

4. A method according to any preceding claim wherein calculation of the existing quality of the channel of variable quality is performed periodically during communication.

5. A method according to any preceding claim, wherein the relative channel quality is calculated as the minimum channel quality required such that data sent on the channel is received with an error ratio below a defined threshold.

6. A method according to any preceding claim wherein the step c of indicating transport format combinations and channel quality requirements to the mobile station includes the steps of:
(c1) ranking the transport format combinations according to the associated channel quality requirement; and
(c2) indicating the rank of each transport format combination to the mobile station, along with the transport format combinations themselves, to the mobile station.

7. A method according to claim 6, wherein the step c2 of indicating the rank of each transport format combination comprises indicating the transport format combinations themselves in order of increasing, or decreasing, rank.

8. A method according to claim 6 or claim 7 wherein the step of indicating the existing quality of the channel of variable quality comprises indicating the rank of the transport format combination having the highest channel quality requirement, which could effectively be employed on the channel in its existing quality.

9. A method according to claim 8, wherein the rank is indicated as an absolute value.

10. A method according to claim 8 wherein the rank is indicated as a relative value, being an offset relative to a previous value of the rank.

11. A communications system comprising a network and a mobile station, respectively comprising means for carrying out the steps of, and arranged to perform, the method of any preceding claim.

12. A network comprising means for carrying out the respective steps of the method of any of claims 1 to 10 and arranged within a communications system according to claim 11.

13. A mobile station comprising means for carrying out the respective steps of the method of any of claims 1 to 10 and arranged within a communications system according to claim 11.

## Patentansprüche

1. Verfahren zum Auswählen einer Transportformatkombination TFC, die für die Datenübertragung von einer Mobilstation an ein Netz in einem Mobilfunkkommunikationssystem, welches ein Netz und mindestens eine Mobilstation umfasst, über einen Kanal mit veränderbarer Qualität verwendet werden soll, wobei das Verfahren die folgenden Schritte beinhaltet:
Im Netz:
a) Definieren eines Satzes möglicher Transportformatkombinationen TFC;
b) Berechnen einer erforderlichen Kanalqualität für die effektive Nutzung jeder der Transportformatkombinationen TFC;
c) Anzeigen der Transportformatkombinationen TFC und der erforderlichen Kanalqualitätswerte für die Mobilstation;
d) Berechnen einer tatsächlich vorhandenen Qualität des Kanals mit veränderbarer Qualität; und
e) Anzeigen der tatsächlich vorhandenen Qualität des Kanals mit veränderbarer Qualität für die Mobilstation;
sowie an der Mobilstation:
f) Speichern der Transportformatkombinationen TFC und der zugehörigen erforderlichen Kanalqualitätswerte;
g) Empfangen der Anzeige der tatsächlich vorhandenen Kanalqualität;
h) Auswählen einer der Transportformatkombinationen TFC, deren Anforderungen an die Kanalqualität nicht über der tatsächlich vorhandenen Kanalqualität liegen; und
i) Informieren des Netzes über die ausgewählte Transportformatkombination TFC;
**dadurch gekennzeichnet, dass** die Anzeige der tatsächlich vorhandenen Kanalqualität des Kanals mit veränderbarer Qualität mittels Inband-Signalisierung an die Mobilstation übermittelt wird, wobei die Anzeige der tatsächlich vorhandenen Kanalqualität des Kanals mit veränderbarer Qualität in jedem Funk-Datenblock in der Abwärtsstrecke enthalten ist, und zwar an Datenpositionen, die normalerweise für den Transport von Nutzerinformationen zugewiesen sind.

2. Verfahren gemäß Anspruch 1, wobei der Schritt (h) des Auswählens einer der Transportformatkombinationen TFC unter Berücksichtigung des Typs der Daten, die von der Mobilstation übertragen werden sollen, erfolgt.

3. Verfahren gemäß Anspruch 1 oder 2, wobei die Transportformatkombinationen TFC die Übertragung von Datenblöcken ermöglichen, wobei in jedem Datenblock jeweils Daten unterschiedlicher Datenblockströme TBF enthalten sind.

4. Verfahren gemäß einem der vorstehenden Ansprüche, wobei die Berechnung der tatsächlich vorhandenen Kanalqualität des Kanals mit veränderbarer Qualität in regelmäßigen Abständen während der laufenden Datenübertragung erfolgt.

5. Verfahren gemäß einem der vorstehenden Ansprüche, wobei die relative Kanalqualität als die minimal erforderliche Kanalqualität berechnet wird, sodass Daten, die über den Kanal übertragen werden, mit einer Fehlerrate unterhalb eines definierten Schwellenwertes empfangen werden.

6. Verfahren gemäß einem der vorstehenden Ansprüche, wobei der Schritt (c) des Anzeigens der Transportformatkombinationen TFC und der erforderlichen Kanalqualität für die Mobilstation folgende Schritte beinhaltet:
(c1) Einordnen der Transportformatkombinationen TFC in eine Rangfolge gemäß den entsprechenden Anforderungen an die Kanalqualität; und
(c2) Anzeigen der Rangstufe jeder Transportformatkombination TFC zusammen mit den Transportformatkombinationen selbst für die Mobilstation.

7. Verfahren gemäß Anspruch 6, wobei der Schritt (c2) des Anzeigens der Rangstufe jeder Transportformatkombination TFC beinhaltet, dass die Transportformatkombinationen selbst nach Rangstufen geordnet in aufsteigender oder absteigender Reihenfolge angezeigt werden.

8. Verfahren gemäß Anspruch 6 oder 7, wobei der Schritt des Anzeigens der tatsächlich vorhandenen Kanalqualität des Kanals mit veränderbarer Qualität das Anzeigen der Rangstufe der Transportformatkombination TFC mit den höchsten Anforderungen an die Kanalqualität, die auf dem Kanal in der gegebenen Qualität effektiv eingesetzt werden könnte, umfasst.

9. Verfahren gemäß Anspruch 8, wobei die Rangstufe als ein absoluter Wert angegeben wird.

10. Verfahren gemäß Anspruch 8, wobei die Rangstufe als ein relativer Wert angegeben wird, bei dem es sich um einen Versatz gegenüber einem vorherigen Wert der Rangstufe handelt.

11. Kommunikationssystem, welches ein Netz und eine Mobilstation umfasst, welche jeweils Mittel beinhalten zur Ausführung der Schritte des und ausgelegt sind für die Durchführung des Verfahrens gemäß einem der vorstehenden Ansprüche.

12. Netz, welches Mittel umfasst, um die jeweiligen Schritte des Verfahrens gemäß einem der Ansprüche 1 bis 10 auszuführen, und das innerhalb eines Kommunikationssystems gemäß Anspruch 11 angeordnet ist.

13. Mobilstation, welche Mittel umfasst, um die jeweiligen Schritte des Verfahrens gemäß einem der Ansprüche 1 bis 10 auszuführen, und die innerhalb eines Kommunikationssystems gemäß Anspruch 11 angeordnet ist.

## Revendications

1. Une méthode de sélection d'une combinaison TFC de formats de transport à utiliser pour la communication entre une station mobile et un réseau, dans un système de communications mobile comprenant un réseau et au moins une station mobile, via un canal de qualité variable, ladite méthode comprenant les étapes :
au niveau du réseau :
a) de définition d'un ensemble de combinaisons possibles de formats de transport;
b) de calcul des exigences de qualité du canal pour l'utilisation efficace de chacune des combinaisons de formats de transport;
c) d'indication à la station mobile des combinaisons de formats de transport et des exigences de qualité du canal;
d) de calcul d'une qualité existante du canal de qualité variable; et
e) d'indication à la station mobile de la qualité existante du canal de qualité variable;
et au niveau de la station mobile :
f) d'enregistrement des combinaisons de formats de transport et des exigences de qualité du canal s'y rapportant;
g) de réception de l'indication d'une qualité de canal existante;
h) de sélection de l'une des combinaisons de formats de transport présentant une exigence de qualité de canal n'étant pas supérieure à la qualité de canal existante, et
i) d'information du réseau de la combinaison de transport ainsi choisie.
**caractérisée en ce que** l'indication de la qualité existante du canal de qualité variable est communiquée à la station mobile par une transmission de signal intrabande, l'indication de la qualité existante du canal de qualité variable étant incluse dans chaque paquet radio de liaison descendante, dans les emplacements de données normalement assignés au transfert de l'information destinée à l'utilisateur.

2. Une méthode selon la revendication 1, dans laquelle l'étape h de sélection de l'une des combinaisons de formats de transport est exécutée en fonction du type de données à transmettre par la station mobile.

3. Une méthode selon la revendication 1 ou selon la revendication 2, dans laquelle les combinaisons de formats de transport permettent la transmission de blocs de données contenant des données provenant de différents flux de blocs temporaires dans chaque bloc.

4. Une méthode selon l'une quelconque des revendications précédentes, dans laquelle le calcul de la qualité existante du canal de qualité variable est exécuté périodiquement en cours de communication.

5. Une méthode selon l'une quelconque des revendications précédentes, dans laquelle la qualité relative du canal est calculée comme étant la qualité minimale requise du canal pour que les données envoyées sur le canal soient reçues avec un taux d'erreur inférieur à un seuil défini.

6. Une méthode selon l'une quelconque des revendications précédentes, dans laquelle l'étape c d'indication à la station mobile des combinaisons de formats de transport et des exigences de qualité du canal comprend les étapes :
(c1) de classification des combinaisons de formats de transport selon l'exigence de qualité du canal qui y est associée; et
(c2) d'indication à la station mobile du rang de chaque combinaison de formats de transport, en même temps que les combinaisons de formats de transport elles-mêmes transmises à la station mobile.

7. Une méthode selon la revendication 6, dans laquelle l'étape c2 d'indication du rang de chaque combinaison de formats de transport comprend l'indication des combinaisons de formats de transport elles-mêmes par ordre de classement croissant, ou décroissant.

8. Une méthode selon la revendication 6 ou la revendication 7, dans laquelle l'étape d'indication de la qualité existante du canal de qualité variable comprend l'indication du rang de la combinaison de formats de transport présentant l'exigence la plus élevée de qualité de canal, qui pourrait être utilisée efficacement pour le canal à son niveau de qualité existant.

9. Une méthode selon la revendication 8, dans laquelle le rang est indiqué comme étant une valeur absolue.

10. Une méthode selon la revendication 8, dans laquelle le rang est indiqué comme étant une valeur relative, étant un écart relatif par rapport à une valeur de rang précédente.

11. Un système de communication comprenant un réseau et une station mobile, comprenant des moyens permettant d'exécuter les étapes de la méthode décrite selon l'une quelconque des revendications précédentes d'une part, et d'autre part configurés pour exécuter ladite méthode.

12. Un réseau comprenant des moyens d'exécuter les étapes respectives de la méthode selon l'une quelconque des revendications 1 à 10, et configuré au sein d'un système de communication selon la revendication 11.

13. Une station mobile comprenant des moyens d'exécuter les étapes respectives de la méthode de l'une quelconque des revendications 1 à 10, et configurée au sein d'un système de communication selon la revendication 11.
